# EUROPEAN PATENT SPECIFICATION

(11) **EP 4 375 568 B1**
(45) Date of publication and mention of the grant of the patent: **10.09.2025**
(21) Application number: 22209098.7
(22) Date of filing: 23.11.2022
(51) Int. Cl.: F21S 43/14, F21S 43/15, F21S 43/237, F21S 43/239, F21S 43/241, F21S 43/243, F21S 43/245, F21S 43/249, F21S 43/251, F21S 43/31, F21V 8/00

(54) **ILLUMINATION ASSEMBLY FOR A VEHICLE**
BELEUCHTUNGSANORDNUNG FÜR EIN FAHRZEUG
ENSEMBLE D'ÉCLAIRAGE POUR UN VÉHICULE

(43) Date of publication of application: 29.05.2024
(73) Proprietor: Hella Autotechnik Nova, s.r.o., 78985 Mohelnice (CZ)
(72) Inventor: Simicek, Marek, 77900 Olomouc (CZ); Malina, Radomir, 77900 Olomouc (CZ); Filip, Josef, 78985 Mohelnice (CZ)
(74) Representative: Behr-Wenning, Gregor

(56) References cited:
- WO-A1-2016/104111
- CN-A- 109 539 177
- CN-A- 110 500 556
- CN-U- 212 029 391
- DE-A1- 102016 100 207
- JP-A- 2020 098 695
- US-A1- 2018 003 878
- US-B1- 11 099 316

## Description

### Technical field

The present invention relates to an automotive lighting assembly, especially a decorative light source, having plate-shaped forked lightguide providing a three-dimensional lit pattern when viewed from the outside, the lightguide utilizing light from a single multi-LED light source.

### Background of the Invention

It is known in the state of the art to use plate-shaped lightguides in automobile lamps. Such lightguides are usually provided with a row of LEDs along one of their edges. Light from the LEDs can leave the lightguide through an opposite edge and/or can be outcoupled through one of the lightguide sides using an array of outcoupling elements. The single row of LEDs can than illuminate a large and two-dimensional surface area of the lightguide, i.e., two-dimensional illumination effect can be achieved from one-dimensional row of LEDs.

For achieving a three-dimensional illumination effect, multiple plate-shaped lightguides can be used and/or one branched/forked lightguide can be used. With the three-dimensional effect, light exit surfaces of the lightguide(s) are arranged in space, i.e., preferably not in a single plane, which significantly improves design of the automobile lamp. Such a branched lightguide is, for example, disclosed in document EP2354637 B1. The shape of this lightguide is however quite limited, the branches at their intersection need to have a relatively large angle between them, i.e., need to be close to being parallel, in order to distribute light into all the branches. Alternatively, multiple rows of LEDs are used to provide light for the branched lightguide.

Another example of a branched lightguide is disclosed in document DE102016100207 A1. This lightguide has several branches, connected at right angles, wherein light is reflected to the branches by inclined reflection surfaces. A first branch of this lightguide, which receives light from a light source and guides it to other branches, is parallel to the direction in which the lightguide outputs light. A sufficient space for the first branch needs to be provided in the vehicle carrying this light guide.

It would therefore be advantageous to provide an illumination assembly with a branched lightguide, where the lightguide would require only one row of LEDs while providing sufficient amounts of light for all its branches regardless of angles between them. Any required three-dimensional illumination effect can then be provided with a single lightguide and a single row of light sources.

### Summary of the Invention

The shortcomings of the solutions known in the prior art are to some extent eliminated by illumination assembly for a vehicle, the assembly comprising a light source and a branched lightguide. The branched lightguide has at least three plate-shaped branches, wherein first branch, second branch and third branch have a common intersection extending along their width. The intersection can for example have a parallelogrammical shape, oval shape etc., depending on angles between branches, rounding of edges or corners etc. There is a first angle α between the first branch and second branch at the intersection and a second angle β between the first branch and the third branch at the intersection. The first branch comprises a light-entry surface directed towards the light source, or rather the light source is directed towards the light-entry surface.

At least two of the at least three branches comprise light outcoupling elements, wherein the outcoupling elements on at least two different branches are configured to direct light out of the branched lightguide into a common direction. There can also be branches with outcoupling elements directing light to a different direction, e.g., a second common direction different from the first one. For example, the assembly can illuminate the road with a certain light pattern (one common direction is towards the ground behind vehicle) and can send light to the rear with a second (same or different) light pattern, that is directly visible for other drivers behind the vehicle. Some branches can than have outcoupling elements for directing light to multiple different directions, and some branches can have outcoupling elements for one common direction only. Each branch preferably has outcoupling elements and/or has its free end visible and/or provides light for another branch.

The first branch comprises a reflection surface extending in the intersection. The reflection surface is adapted for reflecting a first part of light from the first branch to the second branch. The reflection surface extends through at most 80 % of thickness of the first branch, i.e., there is a space left in the intersection for some light to pass around the reflection surface - the at least 20 % of width is generally sufficient for guiding enough light to illuminate another branch. The reflection surface can also extend through a much smaller portion of the width, e.g., only 20 %, if a majority of the light needs to be provided to the third branch, such as when the third branch is further branched and the second branch isn't. The intersection with the reflection surface are thus adapted, especially by the size of the reflection surface, to guide a second part of the light from the first branch to the third branch. The light from the light source is thus divided between branches. Each branch can further split into more branches. The first branch, the second branch and the third branch all comprise the outcoupling elements to direct light out in the common direction from one of the sides of each branch, i.e. from one of its two opposing largest surfaces, so that the outcoupling elements are all visible from the common direction.

A plate-shaped branch can be a branch having thickness significantly smaller than both width (dimension along the intersection) and length (dimension from the intersection towards a free end of the branch or possibly towards another intersection), for example at least five times smaller. The sides of the branch, i.e., its two opposing largest surfaces, can be planar or curved. The light source preferably comprises LEDs. The outcoupling elements can be for example micro lens, grooves, cuts, protrusions or depressions etc. They can be created on the surface of the branch. It is also possible to create outcoupling elements inside of the branch, e.g., by adding reflective particles, surfaces or bubbles to the branch at desired places. They can be provided on one side of the branch or both sides and they can let the light pass through the side they're on or can reflect the light towards the opposite side through which it then leaves the branched lightguide. The illumination pattern can correspond to the shape of the areas having the outcoupling elements, e.g., the outcoupling elements can be arranged into stripes and the illumination pattern is then stripes. The outcoupling elements can also be individually or locally designed to provide a certain pattern, e.g., reflect light to desired direction to form a desired shape of illumination, without the shape or pattern being discernible on the branch itself, especially when micro-optics elements are used.

It is advantageous to have at least one of the branches, especially its outcoupling elements, visible through another branch, especially another branch also provided with outcoupling elements, when viewed from the common direction. This results in a very apparent 3D illumination pattern and thus can provide a very distinctive appearance to the assembly or the lamp and vehicle it's used on.

The present invention provides a branched lightguide where the branches can have basically any angle between them while only using a single light source, e.g., a single row of LEDs. The reflection surface guides the light to the second branch even if the first angle α is relatively small, e.g., smaller than 120°; the angle can even be close to 0°, e.g., less than 30°, because the light can be reflected substantially backwards by the reflection surface. Branched lightguides known in the art cannot be used with such angles between their branches, or they require another light source, which increases cost and size, or the branching(s) must be gradual, which also increases cost and size of the assembly. In the present invention, the second branch can form a sharp corner with the first branch, so the branching takes up much less space.

Since all the light from the light source can at first be guided by the first branch and then divided at the intersection, the light source can be farther away from a visible side of the lamp (e.g., a cover lens) comprising the assembly and can be hidden from view. Many lightguides known in the art have to be branched right after their light-entry surface in order to allow light into all branches, and the light source is then visible and there is less freedom for the manufacturer when designing the lightguide.

The first angle α can be less than or equal to 150 degrees, preferably less than or equal to 120 degrees, and the second angle β can be larger than or equal to 140 degrees. The second angle β thus enables the light to be guided without providing a reflection surface; total internal reflection on the walls of the branched lightguide is sufficient. The first angle α, on the other hand, is preferably smaller than the second, e.g., an angle of 90° ± 30° would be preferable for most applications, so that it diverges significantly from the first and third branches in order to provide a significant 3D illumination pattern, and using the reflection surface is then very advantageous for directing sufficient amounts of light to the second branch. The first angle α and second angle β are both at most 180° since that's a maximum angle between two planes or plates. Then can however be measured from different sides of the first branch.

At least three branches comprise light outcoupling elements, wherein the outcoupling elements on at least three different branches (which may or may not be all of the at least three branches having outcoupling elements) are configured to direct light out of the branched lightguide in a common direction. More branches with outcoupling elements visible from the common direction mean more areas where the 3D pattern can be created, e.g., multiple planes providing points of light. For example, there can be a 1^{st} branch, 3^{rd} branch, 5^{th} branch and so on, which are substantially parallel to each other and placed one behind another, and a 2^{nd}, 4^{th} 6^{th} branch and so on are then substantially perpendicular to the odd-numbered branches, extend from their respective subsequent intersections and are also substantially parallel to each other. When viewed from the common direction, each of the even-numbered branches then provides one or two (if outcoupling elements are on both sides) planes of illumination. Multiple such planes can be thus provided next to each other, all receiving light from the one light source, and multilayered 3D illumination object can thus be provided, which then appears similar to a hologram when viewed from the common direction. The common direction is then preferably substantially perpendicular (e.g., 90±30°) to the even-numbered branches.

The light source can be a row of LEDs located along the light entry surface or it can be a second lightguide having a LED on at least one of its ends and having a light-exit surface extending along the light entry surface of the branched lightguide. The row of LEDs is preferable as it can provide a much higher light intensity.

The reflection surface can comprise a metallic reflective layer. Non-metallic reflective layer is also possible, e.g., a reflective paint or polymeric foil. This layer is especially advantageous when the first angle α is small, since the reflection surface can then be close to perpendicular to the first branch and total internal reflection might be difficult to achieve.

Preferably the branched lightguide comprises a groove extending along the intersection, wherein the reflection surface is a wall of the groove or a part thereof. The groove can be molded together with the lightguide, or it can be manufactured individually. Having the reflection surface as an outer wall of the lightguide, delimiting the groove, is easier to manufacture and easy to provide with a reflective layer, if required.

The branched lightguide can comprise a fourth branch and a second intersection of the fourth branch with at least one other branch, wherein the second intersection comprises a second reflection surface for reflecting light from one branch to another. The fourth branch can intersect any of the other branches, especially the second one or the third one. The second intersection and the reflection surface can have the same features as the first intersection and reflection surface, but they can also be created differently. For example, each reflection surface can have a different shape or size, one can have a reflective layer while the other does not, etc., depending, among other things, on angle of the respective branch, on whether this branch is further branched, on a desired illumination intensity of the branch etc.

A third angle γ, which is between the first branch and the reflection surface, can be (90° + (0.5 x the first angle α)) ± 20°. In other words, the third angle γ can depend on the first angle α; it can especially be directed approximately towards the axis of the first angle α, which follows from the relationship between angle of incidence and reflection. In other words, the reflection surface has a normal vector which, when viewed along the intersection, approximately divides the first angle α in half.

The reflection surface can have a shape selected from a planar shape, parabolical shape and cylindrical shape. A planar shape is preferable, since it is the easiest to design and manufacture, however a curved shape might be better for some applications, e.g., depending on the first angle α and on whether a reflective layer is used.

The shortcomings of the solutions known in the prior art are to some extent also eliminated by a vehicle rear lamp which comprises the illumination assembly of the invention.

### Description of drawings

A summary of the invention is further described by means of exemplary embodiments thereof, which are described with reference to the accompanying drawings, in which:
- Fig 1.: Shows a perspective view of the illumination assembly of the invention, wherein the light source is a row of LEDs and the branched lightguide has three branches approximately perpendicular to each other.
- Fig 2.: Shows a sideview of the assembly of fig. 1, wherein the common direction into which the outcoupling elements direct light from the branched lightguide is indicated with an arrow.
- Fig 3.: Shows a detail of the branch intersection from fig. 2, wherein the intersection is indicated by dash-and-dot lines, the reflection surface is provided with a metallic reflective layer and the first and second angles α, β between the branches are indicated with arrows.
- Fig 4.: Show a perspective view of the assembly in an alternative embodiment, wherein the light source is a second lightguide with LEDs on both ends and branch dimensions are indicated for the second branch and third branch.
- Fig 5.: Shows a schematic view of another embodiment, wherein the branched lightguide has five branches with two intersections, wherein reflection surface angle is indicated for both intersections.
- Fig 6.: Shows a schematic alternative embodiment where the third branch is angled differently with respect to the first branch than in fig. 3.
- Fig 7.: Shows another alternative embodiment where the second and third branches are bent, wherein the first and second angles α, β are measured at the intersection, i.e., they are measured from a tangent to the respective branch, the tangent touching the branch at the intersection.

### Exemplary Embodiments of the Invention

The invention will be further described by means of exemplary embodiments with reference to the respective drawings. The subject of the present invention is an illumination assembly for a vehicle for providing a 3D illumination effect. The assembly comprises a light source, e.g., a row of LEDs 13, and a branched lightguide 1 with at least three plate-shaped branches. At least three of those branches - first branch 5, second branch 6 and third branch 7, have a common intersection 8, where the second branch 6 is angled by a first angle α with respect to the first branch 5, and the third branch 7 is angled by a second angle β with respect to the first branch 5. The first branch 5 is a light-entry branch having a light-entry surface 9 towards which the light source is directed. All three branches have light outcoupling elements 10 adapted to direct light out of the respective branch towards a common direction 11, e.g., behind the automobile if the assembly is a part of a rear lamp. Preferably, light outcoupled from one branch travels towards the common direction 11 through another branch, preferably one also provided with outcoupling elements 10. This results in an aesthetically pleasing 3D effect where the one branch is visible through the other one so that there are at least two planes of illuminated pattern visible on the assembly when viewed from the common direction 11. The branched lightguide 1 can then for example provide a three-dimensional array of points of light set in two or more planes, utilizing light from the single light source, e.g., from a single PCB with a row of LEDs 13.

The first branch 5 comprises a reflection surface 12 located in the intersection 8, preferably extending through most of the intersection's 8 width, preferably at least 80 %, more preferably at least 90 %, most preferably through the whole width of the intersection 8. The width of the intersection 8 is its main, longest dimension. The reflection surface 12 is adapted by its shape, especially its inclination with respect to the first branch 5 (a third angle γ) to reflect a first part of light from the first branch 5 towards the second branch 6 and to let a second part of the light pass to the third branch 7 through and/or around the reflection surface 12. The reflection surface 12 spans through at most 80 % of thickness 4 of the first branch 5, such that there is a space left for guiding the second part of the light to the third branch 7.

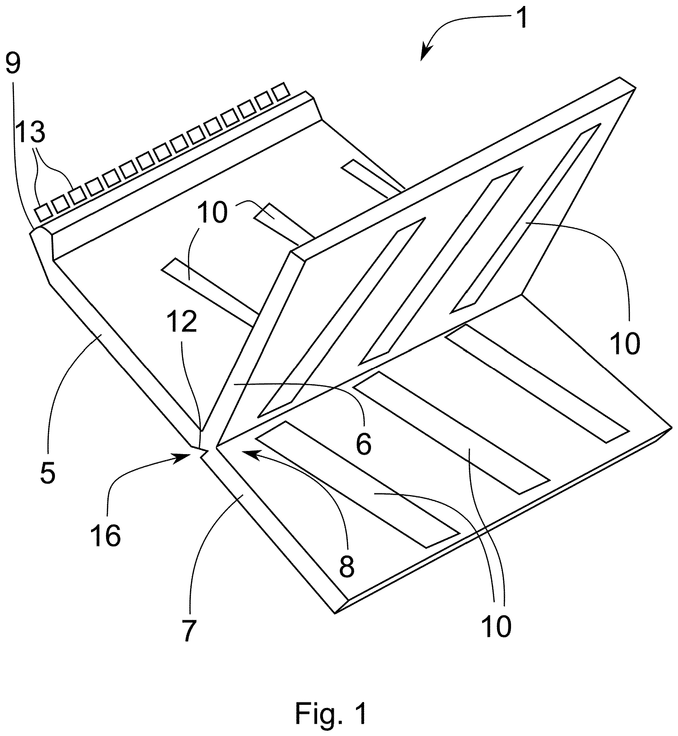

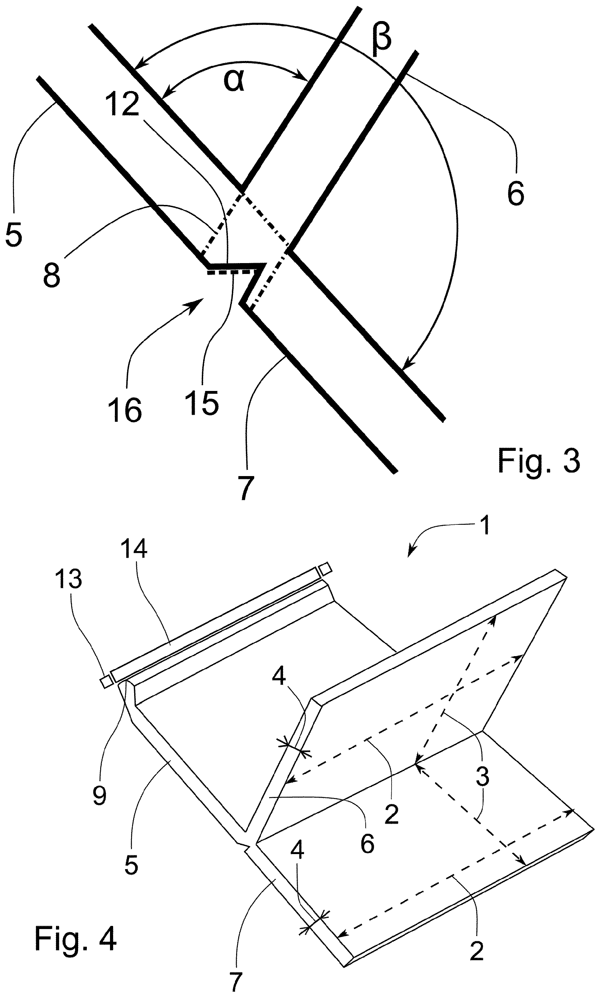

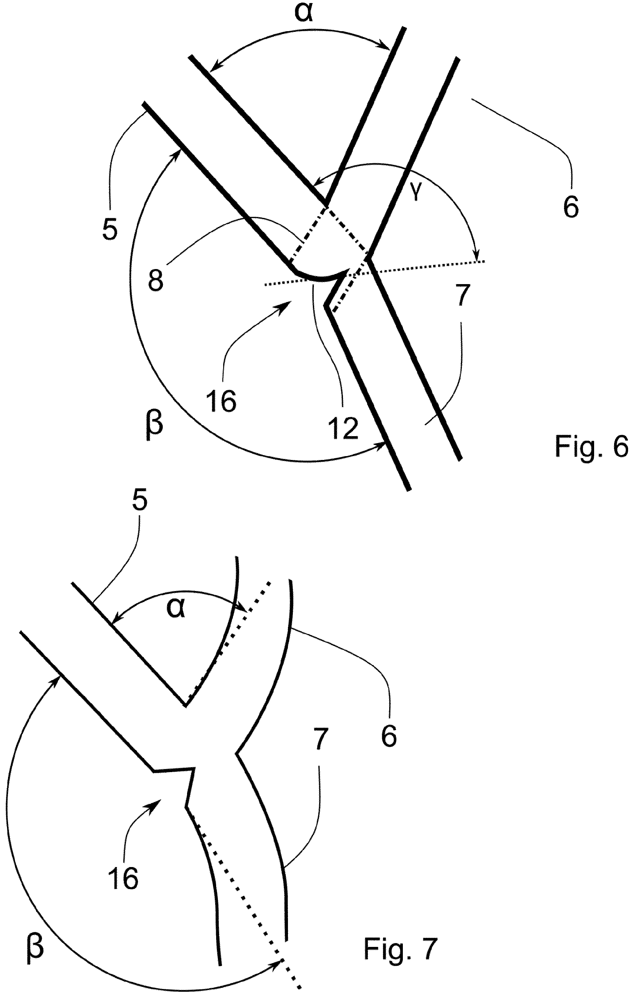

An exemplary embodiment of the invention is shown in figs. 1 to 4. The branched lightguide 1 comprises three branches, all having approximately rectangular shape with uniform thickness 4. The first branch 5 further comprises a light-collimation entry portion, angled with respect to the rest of the branch, comprising the light-entry surface 9 provided with multiple LEDs 13. The first angle α is about 80°, in general it's preferably at most 150°, more preferably at most 120°. Without the reflection surface 12, for angles this small, light would not be guided to the second branch 6 in sufficient amounts. The second angle β is about 180°, in general it's preferably at least 140°, so that the light can be effectively guided to the third branch 7 around the reflection surface 12. The first and second angles are schematically depicted in fig. 3, they can both be at most 180°, since they basically describe angles between planes, but they can extend to different sides from the first branch 5 (see fig. 6 for an example). In the figures, the angles are measured between the sides of the branches. Alternatively, they can also be measured between the optical axes of the branches, i.e., between imaginary surfaces passing along the length of each branch at the same distance from both of its sides.

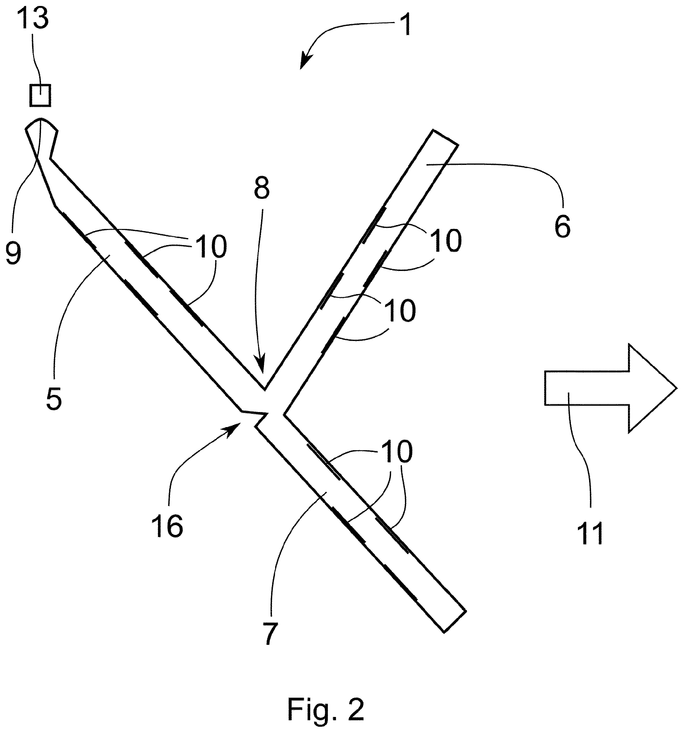

The branches are plate-shaped, but these plates don't have to be planar, i.e., some or all of the branches can be curved, as depicted in fig. 7. The first angle α and/or second angle β and/or third angle γ (as defined below) can then be measured with respect to tangents (dotted lines in fig. 7). These angles can also in some embodiments be nonconstant along the width 2 of the branched lightguide 1, i.e., the cross-section depicted schematically in figs. 2, 3, 5, 6 and 7 might change depending on where the sectional plane cuts through the branched lightguide 1. The reflection surface 12 can then also change its inclination and/or shape along the intersection 8 to provide homogenous illumination throughout the whole branched lightguide 1. Defined sizes of angles or relationships between angles can then be different in each such cross-section perpendicular to the intersection 8. Curved branches might be especially advantageous for example when used in rear lamps which should be visible not only from behind but also from the sides. The branched lightguide 1 or some of its branches can then have a curvature when viewed from above such that the illuminated common direction 11 is to the left or right of the automobile for at least part of the lightguide.

In some embodiments, thickness 4 of each branch can be different and/or can be nonconstant throughout the branch. The width 2 can similarly change along the length 3 of any branch.

When viewed from the common direction 11, i.e., from the direction illuminated by the assembly, from which the assembly is supposed to be visible after being incorporated into a lamp or a vehicle, each branch might be visible only in places where it is provided with outcoupling elements 10 or at its free end. The first branch 5 can in some embodiments, which are not according to the invention, be invisible, i.e., can be made without outcoupling elements 10. Similarly, other branches that guide light to an intersection 8 (see below for embodiments having multiple intersections 8) might in some embodiments be invisible. Other branches, however, are preferably provided with outcoupling elements 10 and/or have their free ends directed towards the common direction 11, such that they are visible from the common direction 11. The outcoupling elements 10 might have the form of mutually angled surfaces, cuts or grooves, protrusions or depressions, micro-optics elements or any other engraving or texture than can cause the light guided in the corresponding branch to be sent out of the branch, especially towards the common direction 11. The outputted light can have a significant divergence, i.e., it can illuminate a large area and it can be visible e.g., from everywhere behind the vehicle. The common direction 11 can thus basically be a cone of directions, the apex angle of the cone being proportionate to the divergence of the outputted light. The sizes and shapes of the outcoupling elements 10 might be random or designed for a specific function, e.g., by a computer modeling software. The outcoupling elements 10 can be provided on either or both sides of a branch, e.g., as depicted in fig. 2, where the branches have several areas of outcoupling elements 10 on both their sides. In other embodiments, some branches or even all branches may have outcoupling elements 10 on one side only. In the shown embodiment, all three branches have outcoupling elements 10 so they are all visible from the common direction 11 and the free ends of the second branch 6 and third branch 7 might also be visible, depending on other components of the lamp comprising the assembly. It can be clearly seen in fig. 2 that the first branch 5 is visible through the second branch 6, so the planes of illumination of these two branches are one behind another when viewed from the common direction 11 and thus a strong 3D illumination effect is achieved.

Preferably, each branch that does not provide light for another branch (as e.g., the first branch 5 does) comprises outcoupling elements 10 and/or has its free end visible from the common direction 11. The branches that do provide light for another branch can also have outcoupling elements 10, but some of them can in some embodiments be substantially invisible/unlit when viewed from the common direction 11.

The reflection surface 12 can be configured to reflect light solely due to total internal reflection and it can be provided with a reflective layer 15, e.g., a metallic reflective layer 15. Preferably, the reflection surface 12 is formed as a wall of a groove 16 created in the branched lightguide 1 at the intersection 8. The groove 16 can for example be "V"-shaped (see fig. 2) or "U"-shaped, it can have a trapezoidal cross-section, parabolic cross-section etc. The reflection surface 12 can then be a part of the groove 16, especially one of its walls as in the depicted embodiments. The reflection surface 12 can be planar, which is easier to design and manufacture, but in can also be curved, e.g., having circular, elliptic, or parabolic cross-section. An appropriate shape can be chosen by a skilled person for example based on the shape of the branches.

The third angle γ between the reflection surface 12 and the first branch 5, e.g., one of its sides at the intersection 8 or a tangent to the first branch 5 at the intersection 8, is chosen such that a desired reflectiveness, e.g., the total internal reflection, can be achieved, for the second part of the light. For a curved reflection surface 12, the third angle γ can be measured for example in the center of the reflection surface 12, when viewed from the side (see fig. 6 where the third angle γ is measured between the first branch 5 and a tangent constructed at the center of the reflection surface 12 (dotted line)), or as an average angle over the whole reflection surface 12. The third angle γ is thus preferably chosen to be (90° + (0.5 x the first angle α)) ± 20°, this formula preferably holds along the whole width 4 of the branched lightguide 1. The normal vector of the reflection surface 12 (e.g., constructed at the center of the reflection surface 12) is thus approximately parallel to axis of the first angle α.

Fig. 4 shows an embodiment where the light source comprises a second lightguide 14, e.g., with a circular cross-section with outcoupling elements 10, with LEDs 13 on both ends. Alternatively, the light source can be for example a row of LEDs 13 directed towards the light-entry surface 9 of the first branch 5, with a second lightguide 14 or another optical element for light homogenization or directing between them. Other light source than LED-comprising one can generally also be used. In fig. 4, there is also a depiction of dimensions of individual branches. It can be seen that thickness 4 is the smallest branch dimension, e.g., at least five times or ten times smaller than width 2 and/or length 3. Width 2 is the dimension common for all branches at the intersection 8 and length 3 is the dimension measured from the intersection 8 to the free end (or light-entry surface 9) of the branch. Fig. 4 also shows how a first part of light from the first branch 5 gets reflected to the second branch 6 while a second part is guided around the groove 16 to the third branch 7, where it will be further divided into another first part to be reflected and second part to be guided around the second groove 16.

The branched lightguide 1 can have more than three branches. In some embodiments, more than three branches can share an intersection 8. The reflection surface 12 can than direct light to multiple branches, i.e., the first part of the light is further divided, for example these two branches might have similar orientation, or the reflection surface 12 can have two differently-angled parts, each for one branch. More than one branch can also be receiving the second part of the light, i.e., they can have their second angles β close to 180°, so that no reflection surface 12 is needed for them.

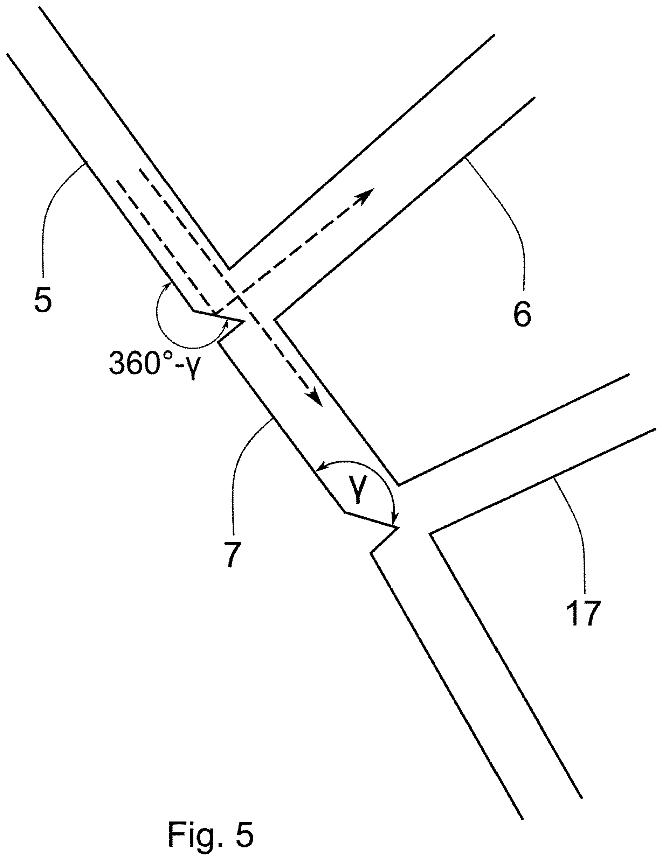

Preferably, for embodiments having more than three branches, there are multiple intersections 8 (see fig. 5). Each reflection surface 12 can then be configured for reflecting light to a single branch, which is easier to design and manufacture. A fourth branch 17 can extend from any of the other branches, i.e., any branch can be further branched and can have another intersection 8, which can (but doesn't necessarily have to) have another reflection surface 12. The angles between branches, the inclination and shape of the reflection surface 12 etc. can then be realized analogically to the first intersection 8 described above with respect to figs. 1-4 and 6-7.

In some embodiments, the reflection surface 12 can be formed from a piece of reflective material surrounded by the translucent material of the branched lightguide 1, e.g., placed to the intersection 8 in a form before molten material is injected therein. The branched lightguide 1 can for example be made from PMMA or polycarbonate, glass is also possible. The material can further comprise a pigment, e.g., a red one for use as a vehicle rear lamp. Different-colored material can be also used to form a part of the branched lightguide 1 or a part of some branch. Similarly, a part of the lightguide or a branch can be coated by a colored paint. A material containing diffusion particles can also be used for the lightguide or its part, e.g., to increase homogeneity of the transferred light. It is also possible to color the reflection surface 12 or the reflective layer 15, so that the second branch 6 outputs light of different color than the first branch 5 or third branch 7. The final illumination pattern or layered illumination object can then be formed from different colors, even though a single-color light source is used.

The illumination assembly of the invention can be part of an automobile lamp. This lamp can further comprise construction elements, e.g., a frame for holding its components together and connecting them to the automobile, cover glass, sealings etc., other optical elements, e.g., further lightguides, light sources, lens, reflectors etc., other electronical components, e.g., sensors, wiring, motors, and so on. The lamp can be for example a headlight or an illuminated front grill mask, it can be an interior lamp, it can be a rear lamp etc. The desired application than influences the shape and size of the branched lightguide 1, e.g., for a grill mask, the width 2 of the branched lightguide 1 can be over 100 cm, while for a rear automobile lamp, the width 2 can be 10-20 cm. The branched lightguide 1 is especially advantageous as an aesthetical improvement to lamps known in the art, thanks to the provided 3D effect and simpler manufacture. For example, the assembly can be a part of a rear position lamp for an automobile or a truck. The light source, the branched lightguide 1, any potential second lightguide 14 and/or a cover glass can then be red so that a red light is outputted by the lamp.

### List of reference numbers

1 - branched lightguide
2 - width
3 - length
4 - thickness
5 - first branch
6 - second branch
7 - third branch
8 - intersection
9 - light-entry surface
10 - outcoupling element
11 - common direction
12 - reflection surface
13 - LED
14 - second lightguide
15 - reflective layer
16 - groove
17 - fourth branch
α - first angle
β - second angle
γ - third angle

## Claims

1. Illumination assembly for a vehicle, the assembly comprising a light source and a branched lightguide (1), wherein the branched lightguide (1) has at least three plate-shaped branches, wherein first branch (5), second branch (6) and third branch (7) have a common intersection (8) extending along their width (2), wherein there is a first angle α between the first branch (5) and second branch (6) at the intersection (8) and a second angle β between the first branch (5) and the third branch (7) at the intersection (8), wherein the first branch (5) comprises a light-entry surface (9) directed towards the light source, wherein at least two of the at least three branches comprise light outcoupling elements (10), wherein the outcoupling elements (10) on at least two different branches are configured to direct light out of the branched lightguide (1) in a common direction (11), wherein the first branch (5) comprises a reflection surface (12) extending in the intersection (8) and adapted for reflecting a first part of light from the first branch (5) to the second branch (6), wherein the reflection surface (12) extends through at most 80 % of thickness (4) of the first branch (5), wherein the intersection (8) with the reflection surface (12) are adapted to guide a second part of the light from the first branch (5) to the third branch (7), **characterized in that** the first branch (5), the second branch (6) and the third branch (7) all comprise the outcoupling elements (10) to direct light out in the common direction (11) from one of the sides of each branch, i.e. from one of its two opposing largest surfaces, so that the outcoupling elements (10) are all visible from the common direction (11).

2. The illumination assembly according to claim 1 wherein the first angle α is less than or equal to 150 degrees and the second angle β is larger than or equal to 140 degrees.

3. The illumination assembly according to claim 2 wherein the first angle α is less than or equal to 120 degrees.

4. The illumination assembly according to any preceding claim wherein more than three branches comprise light outcoupling elements (10), wherein the outcoupling elements (10) on more than three different branches are configured to direct light out of the branched lightguide (1) in the common direction (11).

5. The illumination assembly according to any preceding claim wherein the light source is a row of LEDs (13) located along the light entry surface or a second lightguide (14) having a LED (13) on at least one of its ends and having a light exit surface extending along the light-entry surface (9) of the branched lightguide (1).

6. The illumination assembly according to any preceding claim wherein the reflection surface (12) comprises a reflective layer (15).

7. The illumination assembly according to any preceding claim wherein the branched lightguide (1) comprises a groove (16) extending along the intersection (8), wherein the reflection surface (12) is a wall of the groove (16) or a part thereof.

8. The illumination assembly according to any preceding claim wherein the branched lightguide (1) comprises a fourth branch (17) and a second intersection (8) of the fourth branch (17) with at least one other branch, wherein the second intersection (8) comprises a second reflection surface (12) for reflecting light from one branch to another.

9. The illumination assembly according to any preceding claim wherein a third angle γ between the first branch (5) and the reflection surface (12) is (90 + (0.5 x the first angle α)) ± 20 degrees.

10. The illumination assembly according to any preceding claim wherein the reflection surface (12) has a shape selected from a planar shape, parabolical shape and cylindrical shape.

11. The illumination assembly according to any preceding claim wherein when viewed from the common direction (11), outcoupling elements (10) on one branch of the branched lightguide (1) are visible through another branch having outcoupling elements (10).

12. Vehicle rear lamp **characterized in that** it comprises the illumination assembly according to any of the preceding claims.

## Patentansprüche

1. Beleuchtungsanordnung für ein Fahrzeug, wobei die Anordnung eine Lichtquelle und einen verzweigten Lichtleiter (1) umfasst, wobei der verzweigte Lichtleiter (1) mindestens drei plattenförmige Abzweigungen aufweist, wobei die erste Abzweigung (5), die zweite Abzweigung (6) und die dritte Abzweigung (7) einen sich entlang ihrer Breite (2) erstreckenden gemeinsamen Überschneidungsbereich (8) aufweisen, wobei am Überschneidungsbereich (8) ein erster Winkel a zwischen der ersten Abzweigung (5) und der zweiten Abzweigung (6) besteht und am Überschneidungsbereich (8) ein zweiter Winkel β zwischen der ersten Abzweigung (5) und der dritten Abzweigung (7) besteht, wobei die erste Abzweigung (5) eine auf die Lichtquelle gerichtete Lichteintrittsfläche (9) umfasst, wobei mindestens zwei von den mindestens drei Abzweigungen Lichtauskopplungselemente (10) umfassen, wobei die Auskopplungselemente (10) an mindestens zwei verschiedenen Abzweigungen dazu ausgestaltet sind, Licht aus dem verzweigten Lichtleiter (1) in einer gemeinsamen Richtung (11) zu leiten, wobei die erste Abzweigung (5) eine Reflexionsfläche (12) umfasst, die sich im Überschneidungsbereich (8) erstreckt und zum Reflektieren eines ersten Teils von Licht von der ersten Abzweigung (5) zur zweiten Abzweigung (6) ausgelegt ist, wobei sich die Reflexionsfläche (12) durch höchstens 80 % der Dicke (4) der ersten Abzweigung (5) erstreckt, wobei der Überschneidungsbereich (8) mit der Reflexionsfläche (12) dazu ausgelegt ist, einen zweiten Teil des Lichts von der ersten Abzweigung (5) zur dritten Abzweigung (7) zu leiten, **dadurch gekennzeichnet, dass** die erste Abzweigung (5), die zweite Abzweigung (6) und die dritte Abzweigung (7) alle die Auskopplungselemente (10) umfassen, um Licht von einer der Seiten jeder Abzweigung, d. h. von einer ihrer zwei gegenüberliegenden größten Oberflächen, in der gemeinsamen Richtung (11) nach außen zu leiten, sodass die Auskopplungselemente (10) aus der gemeinsamen Richtung (11) alle sichtbar sind.

2. Beleuchtungsanordnung nach Anspruch 1, wobei der erste Winkel a kleiner/gleich 150 Grad ist und der zweite Winkel β größer/gleich 140 Grad ist.

3. Beleuchtungsanordnung nach Anspruch 2, wobei der erste Winkel a kleiner/gleich 120 Grad ist.

4. Beleuchtungsanordnung nach einem der vorhergehenden Ansprüche, wobei mehr als drei Abzweigungen Lichtauskopplungselemente (10) umfassen, wobei die Auskopplungselemente (10) an mehr als drei verschiedenen Abzweigungen dazu ausgestaltet sind, Licht in der gemeinsamen Richtung (11) aus dem verzweigten Lichtleiter (1) zu leiten.

5. Beleuchtungsanordnung nach einem der vorhergehenden Ansprüche, wobei die Lichtquelle eine Reihe von LEDs (13) ist, angeordnet entlang der Lichteintrittsfläche, oder ein zweiter Lichtleiter (14) mit einer LED (13) an mindestens einem seiner Enden und eine Lichtaustrittsfläche aufweisend, die sich entlang der Lichteintrittsfläche (9) des verzweigten Lichtleiters (1) erstreckt.

6. Beleuchtungsanordnung nach einem der vorhergehenden Ansprüche, wobei die Reflexionsfläche (12) eine reflektierende Schicht (15) umfasst.

7. Beleuchtungsanordnung nach einem der vorhergehenden Ansprüche, wobei der verzweigte Lichtleiter (1) eine sich entlang des Überschneidungsbereichs (8) erstreckende Nut (16) umfasst, wobei die Reflexionsfläche (12) eine Wand der Nut (16) oder ein Teil davon ist.

8. Beleuchtungsanordnung nach einem der vorhergehenden Ansprüche, wobei der verzweigte Lichtleiter (1) eine vierte Abzweigung (17) und einen zweiten Überschneidungsbereich (8) der vierten Abzweigung (17) mit mindestens einer weiteren Abzweigung umfasst, wobei die zweite Abzweigung (8) eine zweite Reflexionsfläche (12) zum Reflektieren von Licht von einer Abzweigung zu einer anderen umfasst.

9. Beleuchtungsanordnung nach einem der vorhergehenden Ansprüche, wobei ein dritter Winkel γ zwischen der ersten Abzweigung (5) und der Reflexionsfläche (12) (90 + (0,5 × der erste Winkel a)) ± 20 Grad beträgt.

10. Beleuchtungsanordnung nach einem der vorhergehenden Ansprüche, wobei die Reflexionsfläche (12) eine Form aufweist, die aus einer ebenen Form, einer Parabolform und einer zylindrischen Form ausgewählt ist.

11. Beleuchtungsanordnung nach einem der vorhergehenden Ansprüche, wobei, bei Betrachtung aus der gemeinsamen Richtung (11), Auskopplungselemente (10) an einer Abzweigung des verzweigten Lichtleiters (1) durch eine weitere Abzweigung mit Auskopplungselementen (10) sichtbar sind.

12. Fahrzeugheckleuchte, **dadurch gekennzeichnet, dass** sie die Beleuchtungsanordnung nach einem der vorhergehenden Ansprüche umfasst.

## Revendications

1. Ensemble d'éclairage pour un véhicule, l'ensemble comprenant une source de lumière et un conduit de lumière ramifié (1), le conduit de lumière ramifié (1) ayant au moins trois branches en forme de plaque, la première branche (5), la deuxième branche (6), et la troisième branche (7) ayant une intersection commune (8) s'étendant le long de leur largeur (2), sachant qu'il y a un premier angle α entre la première branche (5) et la deuxième branche (6) à l'intersection (8) et un deuxième angle β entre la première branche (5) et la troisième branche (7) à l'intersection (8), la première branche (5) comprenant une surface d'entrée de lumière (9) dirigée vers la source de lumière, sachant qu'au moins deux des trois branches comprennent des éléments de découplage de lumière (10), les éléments de découplage (10) sur au moins deux branches différentes étant configurés pour diriger la lumière hors du conduit de lumière ramifié (1) dans une direction commune (11), sachant que la première branche (5) comprend une surface de réflexion (12) s'étendant dans l'intersection (8) et étant adaptée pour réfléchir une première partie de la lumière de la première branche (5) vers la deuxième branche (6), la surface de réflexion (12) traversant au moins 80 % de l'épaisseur (4) de la première branche (5), sachant que l'intersection (8) et la surface de réflexion (12) sont adaptées pour guider une deuxième partie de la lumière de la première branche (5) vers la troisième branche (7), **caractérisée en ce que** la première branche (5), la deuxième branche (6), et la troisième branche (7) comprennent toutes les éléments de découplage (10) pour diriger la lumière dans la direction commune (11) à partir de l'un des côtés de chaque branche, c'est-à-dire à partir de l'une de ses deux plus grandes surfaces opposées, pour que les éléments de découplage (10) soient tous visibles depuis la direction commune (11).

2. L'ensemble d'éclairage selon la revendication 1, le premier angle α étant inférieur ou égal à 150 degrés et le second angle β étant supérieur ou égal à 140 degrés.

3. L'ensemble d'éclairage selon la revendication 2, le premier angle α étant inférieur ou égal à 120 degrés.

4. L'ensemble d'éclairage selon toute revendication précédente, plus de trois branches comprenant des éléments de découplage de lumière (10), sachant que les éléments de découplage (10) sur plus de trois branches différentes sont configurés pour diriger la lumière hors du conduit de lumière ramifié (1) dans la direction commune (11).

5. L'ensemble d'éclairage selon toute revendication précédente, la source de lumière étant une rangée de LED (13) située le long de la surface d'entrée de la lumière ou un second conduit de lumière (14) ayant une LED (13) sur au moins l'une de ses extrémités et ayant une surface de sortie de la lumière s'étendant le long de la surface d'entrée de la lumière (9) du conduit de lumière ramifié (1).

6. L'ensemble d'éclairage selon toute revendication précédente, la surface de réflexion (12) comprenant une couche réfléchissante (15).

7. L'ensemble d'éclairage selon toute revendication précédente, le conduit de lumière ramifié (1) comprenant une rainure (16) s'étendant le long de l'intersection (8), la surface de réflexion (12) étant une paroi de la rainure (16) ou une partie de celle-ci.

8. L'ensemble d'éclairage selon toute revendication précédente, le conduit de lumière ramifié (1) comprenant une quatrième branche (17) et une deuxième intersection (8) de la quatrième branche (17) avec au moins une autre branche, la deuxième intersection (8) comprenant une deuxième surface de réflexion (12) pour refléter la lumière d'une branche à l'autre.

9. L'ensemble d'éclairage selon toute revendication précédente, un troisième angle y entre la première branche (5) et la surface de réflexion (12) étant de (90 + (0,5 x le premier angle α)) ± 20 degrés.

10. L'ensemble d'éclairage selon toute revendication précédente, la surface de réflexion (12) ayant une forme sélectionnée parmi une forme plane, une forme parabolique, et une forme cylindrique.

11. L'ensemble d'éclairage selon toute revendication précédente, **caractérisé en ce que**, vus depuis la direction commune (11), les éléments de découplage (10) d'une branche du conduit de lumière ramifié (1) sont visibles à travers une autre branche comportant des éléments de découplage (10).

12. Feu arrière de véhicule **caractérisé en ce qu'**il comprend l'ensemble d'éclairage selon l'une des revendications précédentes.
